(19) Europäisches Patentamt
European Patent Office
Office européen des brevets

(11) EP 3 508 889 A1

(12) **EUROPEAN PATENT APPLICATION**

(43) Date of publication:
**10.07.2019 Bulletin 2019/28**

(51) Int Cl.:
***G02B 1/18*** *(2015.01)*

(21) Application number: **18150811.0**

(22) Date of filing: **09.01.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(71) Applicant: **Danmarks Tekniske Universitet**
**2800 Kgs. Lyngby (DK)**

(72) Inventors:
- **Telecka, Agnieszka**
  **2200 Copenhagen N (DK)**
- **Taboryski, Rafael Jozef**
  **2880 Bagsværd (DK)**
- **Li, Tao**
  **London, W1W 6UQ (GB)**
- **Ndoni, Sokol**
  **1207 Copenhagen K (DK)**

(74) Representative: **Plougmann Vingtoft a/s**
**Strandvejen 70**
**2900 Hellerup (DK)**

(54) **ANTI-FOGGING TRANSPARENT SURFACE**

(57) The present invention relates to transparent elements comprising surfaces with anti-fogging properties. The anti-fogging surfaces have a hydrophilic surface chemistry and a Young's contact angle of less than 55 degrees. The anti-fogging surfaces are provided by a nanotextured structure comprising a dense hexagonal array of pillars and a hydrophilic coating.

Fig. 1

A
A
10
3
5
7
12
4

EP 3 508 889 A1

**Description**

FIELD OF THE INVENTION

The present invention relates to the technical field of anti-fogging surfaces. Particularly, the present invention relates to anti-fogging surfaces of transparent elements.

BACKGROUND OF THE INVENTION

Fog on surfaces of transparent elements, such as googles, lenses, glasses or other elements where transparency is important for the function of the element, presents a problem. When a surface has a lower temperature than its environment, fog may appear on the surface as the result of moisture condensing on the surface. The condensation results in the accumulation of small water droplets with a diameter larger than the wavelength of visible light (400 nm-800 nm) on the surface, which scatters light and thus leads to reduced visibility through the transparent element. Fogging disables the use of such elements in high performance optical applications.

To avoid fogging, a surface treatment may be applied to the surface. For example, hydrophilic or hydrophobic coatings may be applied to the surface of a transparent element to solve the problem of fogging.

A hydrophilic coating acts to spread or sheet water across a surface. This is often referred to as wetting, as water is sheet-out across the surface, forming a thin transparent film of water on the surface. Only a few materials, such as glass, gold, selected oxides and self-assembled monolayers with hydroxyl group termination, have a surface energy high enough for spontaneous spreading of water to occur. However, surfaces of such materials only exhibit wetting behaviour when freshly prepared and clean. Thus, the strong hydrophilicity and anti-fogging properties of such surfaces usually have a short-term effect, owing to the gradual accumulation of contaminants on the surface.

To impart an improved anti-fog effect, the hydrophilic types of anti-fog coatings typically comprise chemicals, such as surfactant, to lower the surface tension of water on the surface. However, the chemicals may be physically associated with the coatings and thus washed off or leached away over time. Furthermore, the use of chemicals may impact the mechanical strength of the coatings.

Plasma treatment is another widely applied method to achieve wetting, by adding or activating functional groups. However, the anti-fogging properties normally deteriorate after few hours or days, as a result of hydrophobic recovery due to reorientation of the polar chemical groups in the bulk of the material and resulting in reduction of the surface energy.

Hence, it would be advantageous to have a transparent element with a long-lasting anti-fogging effect, without the need for use of a large amount of chemicals.

SUMMARY OF THE INVENTION

Thus, the above described object and several other objects of the invention are intended to be obtained in a first aspect of the present invention by providing a transparent element comprising at least one anti-fogging surface with a hydrophilic surface chemistry and a Young's contact angle of less than 55 degrees, wherein the anti-fogging surface comprise a nanotextured structure on and/or in the transparent element, the nanotextured structure comprising a dense hexagonal array of pillars, wherein

- the average pillar equivalent diameter is in the range of 25-175 nm;
- the average pillar height to average pillar equivalent diameter ratio is in the range of 2:1 and 1:2, preferably in the range of 1:0.9 and 1:1.1;
- the average center-center inter-pillar pitch size is in the range of 30-180 nm;
- the interpillar space, defined as the average center-center inter-pillar pitch size minus the average pillar equivalent diameter is in the range of 5-20 nm and less than half of the average pillar equivalent diameter; and
- the surface fraction is between 40-85%

Transparent elements:

The transparent element of the present invention may be used in optical devices. In some embodiments, the transparent element is used in or as windows, lenses, glasses, mirrors, goggles, wind shields, endoscopy devices, photovoltaic devices, fresnel optical elements, instrument panels or screens, optical user-interfaces or lighting devices.

In some embodiments, the transparent element essentially consists of glass, plastic, thermoplastic or other transparent materials.

In some embodiments, the transparent element is a transparent polymer.

In some embodiments, the transparent element essentially consist of poly(methylmethacrylate), also called plexiglass.

The transparent element of the present invention comprise at least one nanotextured surface, such as two, three, four or more nanotextured surfaces, depending on the desired application of the transparent element.
The transparent element may be only partly transparent, meaning that only a part of the element is transparent.

Nanotextured/nanostructured surface:

The nanotextured surface comprises a nanotextured structure provided on or in the transparent element. In preferred embodiments, the nanotextured structure are a part of, e.g. provided in, the at least one surface of the transparent element. In such cases, the surface of the nanotextured structure facing the external environment is also a surface of the transparent element and is thus in the same material as the transparent element.
In some embodiments, the nanotextured structure is provided on the surface of a transparent element. In such cases, the nanotextured structure may be in the same or a different material than the transparent element, as long as the nanotextured structure is transparent when provided on the transparent element.
The nanotextured structure of the present invention comprises a dense hexagonal array of pillars. The pillars preferably protrude upwardly from the surface of the transparent element. Preferably, the pillars are substantially vertical pillars protruding out from a horizontal surface, in a direction substantially perpendicular to the plane of the surface.
The nanotextured surface may be bended or rounded. In such cases, each vertical pillar preferably protrudes in a direction substantially perpendicular to the plane of the surface in the surface area surrounding that pillar. In that way, the pillars may extend in different directions.
The shape and size of the pillars are primarily defined by a cross section and a height. The pillars preferably have a circular cross section, but may also have a polygonal cross section, such as a triangular, quadratic, pentagonal or other cross section. The actual profiles of the pillars after manufacturing may have minor deviations, such as causing circles to be ellipses.
For pillars with a circular cross section, the average equivalent diameter equals the diameter of the cross-section of the pillars. However, for pillars with a non-circular cross-section, such as a square cross-section, the equivalent diameter refers to the length of the diagonal of the square.
The average pillar equivalent diameter may be calculated as: *sqrt (cross sectional area*4/pi).*
The average equivalent diameter of pillars is less than 200 nm, such as in the range of 25 nm - 200 nm. Preferably, the average equivalent diameter is in the range of 25 nm-175 nm. In some embodiments, the average pillar diameter is below 150 nm, such as below 100 nm, such as below 80 nm, such as below 60 nm.
In some embodiments, the average equivalent pillar diameter is in the range of 25-150 nm, such as in the range of 25-100 nm, such as in the range of 25-80 nm, such as in the range of 50-70 nm, such as in the range of 25-60 nm.
Preferably, all the pillars have the same diameter; even though minor deviations may exist, caused by the manufacturing process.
Preferably the pillars have straight walls, e.g. diameters that don't vary along the length of the pillars. However, the pillars may have a cross section that decrease slightly from the bottom to the top of the pillars e.g. the pillars may have one or more sloped walls. In such cases the average equivalent diameter is preferably defined as the diameter in the bottom part of the pillar. The upper surface e.g. the top of the pillars may be rounded. The upper surface of the top of the pillars may be flat.
The pillars have an average height in the range of 25 nm - 400 nm. Preferably, less than 200 nm, such as less than 100 nm, such as less than 80 nm, such as less than 60 nm. In some embodiments, the average pillar height is in the range of 25-150 nm, such as in the range of 25-100 nm, such as in the range of 25-80 nm, such as in the range of 50-70 nm, such as in the range of 25-60 nm. Preferably, all the pillars have the same heights; even though minor deviations may exist, caused by the manufacturing process.
The average pillar height to average pillar equivalent diameter ratio is in the range of 2:1 and 1:2, such as 1:0.8 and 1:1.2, such as between 1:0.9 and 1:1.1. Preferably, the pillars have a high to diameter aspect ratio of around 1, such as between 1:0.9 and 1:1.1. This is advantageous in the manufacturing process, as pillars with this size can easily be molded.
The pillars are arranged in a dense hexagonal array on the at least one nanotextured surface of the transparent element.
The average center-center inter-pillar pitch size is defined as the shortest possible distance between the center of a first pillar to the center of a second pillar.
The average center-center inter-pillar pitch size is below 200 nm, to avoid diffraction of light. In some embodiments, the average center-center inter-pillar pitch size is in the range of 30-180 nm, such as in the range of 30-120 nm, such as in the range of 30-100 nm, such as in the range of 30-80 nm, such as in the range of 30-75 nm, such as in the range of 70-75 nm.
The inter-pillar space is defined as the shortest distance between the wall of a first pillar to the wall of a second pillar. The inter-pillar space is defined as the average center-center inter-pillar pitch size minus the average equivalent diameter of a pillar. Preferably, the average center-center inter-pillar pitch size minus the average pillar diameter is in the range of 5-20 nm, such as in the range of 5-15 nm, such as in the range of 5-10 nm and less than half of the average pillar equivalent diameter, such as less than one third of the average pillar equivalent diameter, such as less than one fourth of the average pillar equivalent diameter, such as less than one fifth of the average pillar equivalent diameter.

In preferred embodiments, the average pillar equivalent diameter is in the range of 25-175 nm and the average center-center inter-pillar pitch size is in the range of 30-180 nm and the average center-center inter-pillar pitch size minus the average pillar diameter is in the range of 5-20 nm and less than half of the average pillar equivalent diameter.

For a hexagonal array with pillars having an average center-center inter-pillar pitch size of 180 nm, the average equivalent diameter is between 160-175 nm If the average equivalent diameter is 175 nm, the inter-pillar space is 180 nm-175nm=5 nm, which is 1/17 of the average equivalent diameter. Thus, such a pillar is within the scope of the present invention.

If the average equivalent diameter is 160 nm, the inter-pillar space is 180 nm-160 nm=20 nm, which is 1/8 of the average equivalent diameter. Thus, such a pillar is within the scope of the present invention.

For a hexagonal array with pillars having an average equivalent diameter of 25nm, the average center-center inter-pillar pitch size is between 30-45 nm.

If the the average center-center inter-pillar pitch size is 30 nm, the inter-pillar space is 30 nm-25 nm=5 nm, which is 1/5 of the average equivalent diameter. Thus, such a pillar is within the scope of the present invention.

If the average center-center inter-pillar pitch size is 45 nm, the inter-pillar space is 45 nm-25 nm=20 nm, which is 4/5 of the average equivalent diameter. Thus, such a pillar is not within the scope of the present invention, as the inter-pillar space is more than half of the average pillar equivalent diameter.

The inter-pillar space says something about the % of surface area covered by pillars, which is defined as the surface fraction of the at least one anti-fogging surface.

The surface fraction may be calculated as for a hexagonal array of cylindrical pillars with the following formula f:

$$f = \left(\frac{\pi}{2\sqrt{3}}\right)\left(\frac{d}{a}\right)^2 \times 100\%$$

If the average pillar equivalent diameter is in the range of 25-175 nm and the average center-center inter-pillar pitch size is in the range of 30-180nm and the average center-center inter-pillar pitch size minus the average pillar diameter is in the range of 5-20 nm and less than half of the average pillar equivalent diameter, then, the surface fraction is in the range of 40-85%.

The surface fraction may be in the range of 40-90%, such as in the range of 50-90%, such as in the range of 60-90%, such as in the range of 66-90%, such as in the range of 70-90% such as in the range of 50-85%, such as in the range of 60-85%, such as in the range of 66-85%, such as in the range of 70-85%.

Anti-fogging surface

An anti-fogging surface of a transparent element, according to the present invention, is a surface of the transparent element facing the external environment, after the surface have been nanotextured and surface treated in a way so it obtain a hydrophilic surface chemistry.

Experiments and calculations indicate that anti-fogging is possible for surfaces with a Young's contact angle of less than 50-55 degrees, comprising a dense hexagonal nanotextured surface according to the present invention.

A nanotextured surface in or on the transparent element of the present invention itself does not provide an anti-fogging effect. However, surface treatment, lowering the Young's contact angle below 55 degrees, provide an anti-fogging effect. The surface treatment may comprise deposition of a thin transparent hydrophilic layer on the nanotextured surface and/or plasma treatment rendering the surface hydrophilic. Surprisingly, the nanotextured structure in or on the surface of a transparent element coated with a hydrophilic layer according to the present invention, renders the surface anti-fogging for an extended period of time, compared to a flat surface with a hydrophilic coating. This is advantageous, as a general problem with anti-fogging surfaces in the state of the art, is aging, wherein the surface loses its anti-fogging properties within a short period of time. Furthermore, the anti-fogging surface may be obtained by other means, such as plasma treatment of the nanotextured surface to obtain a hydrophilic surface chemistry and decrease the Young's contact angle to below 55 degrees.

In preferred embodiments, the anti-fogging surface have a Young's contact angle between 0 and 55 degrees, such as between 0 and 50 degrees, such as between 0 and 45 degrees, such as between 5 and 55 degrees, such as between 5 and 50 degrees, such as between 5 and 45 degrees.

The transparent element of the present invention retains its anti-fogging properties for at least 7 days, such as at least 14 days, such as at least 21 days such as at least 28 days, such as at least 35 days, such as at least 84 days, such as at least 90 days, such as at least 100 days, such as at least 110 days, such as at least 120 days. The transparent element of the present invention retains its anti-fogging properties for between 7 and 200 days, such as between 84 and 120 days.

The anti-fogging surface may have many properties like wetting, anti-fouling, self-cleaning, and/or others.

Young's contact angle

The Young contact angle is defined as the contact angle between the relevant liquid and a corresponding flat surface (i.e. unstructured) with the same chemical surface composition as the nanotextured surface.

Hydrophilic surface chemistry

A hydrophilic coating acts to spread or sheet water across a surface. This is often referred to as wetting, as water is sheet-out across the surface, forming a thin transparent film of water on the surface. The wetting properties depend on the degree of hydrophilicity of the surface. High hydrophilicity equals high wettability. The hydrophilic surface chemistry is preferably obtained by coating the surface with a hydrophilic compound, such as SiOx, or such as thin metal film, or plasma treating the surface, or a combination thereof.

Deposited organic layers may render the surface hydrophilic if the end group is polar. The highest hydrophilicity is probably obtained by the groups capable of interacting with water molecules through hydrogen bonding such as -OH, -COOH, POOH.

Surface roughness:

It is now well accepted that surface topography plays a crucial role in liquid spreading on a solid surface. The surface topography may either enhance or reduce wetting, depending on the contours and size of the protrusions.
In some embodiments, the anti-fogging surfaces of the present invention have a ratio of the actual surface area to the projected surface area between 2.5-5.5. This may also be referred to as surface roughness. Thus, in some embodiments, the anti-fogging surfaces have a surface roughness of between 2.5-5.5. This is advantageous, as the rough surface may increase the hydrophilicity of the surface.

//Surface treatment//

In some embodiments, the nanotextured surface is covered by an optically transparent layer of siliciumoxide or metal such as tungsten (W), titanium (Ti) or chromium (Cr). The nanotextured surface together with the optically transparent hydrophilic coating of siliciumoxide or metal such as tungsten (W), titanium (Ti) or chromium (Cr), render the surface wetting and anti-fogging. The combination of a nanotextured surface and a hydrophilic layer is advangetous, as the anti-fogging effect is prolonged, compared to a transparent element with only a hydrophilic coating but no nanotextured surface beneat.

In some embodiments, the thickness of the transparent siliciumoxide or metal layer is between 5-20 nm, such as between 10-20 nm, such as between 10-15 nm.

In some embodiments, the transparent siliciumoxide layer comprises or consists of inorganic SiOH-rich silica.

In some embodiments, the nanotextured surfaces have received plasma treatment with Ar, O2 or N2 plasma.

In some embodiments, the nanotextured surfaces have received plasma treatment with Ar, O2 or N2 plasma and comprise a hydrophilic coating on top of the plasma treated nanotextured surface. In some embodiments, the nanotextured surface have a hydrophilic coating on top of nanotextured surface and have received plasma treatment with Ar, Os or N2 plasma on the hydrophilic coating.

The present invention relates to a transparent element with a surface having anti-fogging properties. The anti-fogging properties are obtained by fabricating a nanotextured surface on or in the transparent element and surface treating the fabricated nanostructure to obtain a hydrophilic surface chemistry, such as coating the surface with a thin transparent hydrophilic layer, such as a layer comprising SiOx and/or specific metals.

Normally, the contact angle of a surface decreases over time and loses its anti-fogging properties within a short period of time. However, a nanotextured surface according to the present invention, with a hydrophilic coating according to the present invention, keeps the anti-fogging properties of the surface of the transparent element for an extended period of time (more than 3 month).

Method:

In a second aspect, the present invention relates to a method for providing a transparent element comprising at least one antifogging surface, the method comprising

- providing a transparent element;
- providing a nanotextured surface comprising a dense hexagonal array of pillars, wherein
  - the average pillar equivalent diameter (d) is in the range of 25-175 nm;
  - the average pillar height (h) to average pillar equivalent diameter (d) ratio is in the range of 2:1 and 1:2, preferably in the range of 1:0.9 and 1:1.1;
  - the average center-center inter-pillar pitch size (a) is in the range of 30-180 nm;
  - the average center-center inter-pillar pitch size (a) minus the average pillar equivalent diameter (d) is in the range of 5-20 nm and less than half of the average pillar equivalent diameter (d); and
  - the surface fraction is between 40-85%
- surface treating the nanotextured surface

Surface treatment of the nanotextured surface according to the present invention renders the surface hydrophilic. A hydrophilic surface chemistry renders the surface wetting and thus anti-fogging, as long as the Young's contact angle is below 55 degrees. The combination of nanotextured surface coated with an optically transparent layer of SiOx or metal renders the surface anti-fogging for more than 3 month.

In some embodiments, the surface treatment comprise coating the nanotextured surface with a optically transparent layer of siliciumoxide or metal, such as tungsten (W), titanium (Ti), or chromium (Cr).

In some embodiments, the surface is coated by the plasma enhanced chemical vapor deposition (PECVD) method.

The coating may be deposited on the transparent element in a plasma reactor, by introducing HMDSO monomer and oxygen into the reactor chamber, to initiate the chemical reaction where a coating of desired thickness is formed, by adjusting monomer and oxygens flows and the reaction time. When the desired coating comprise SiOx, the reaction may be as follows:

$$SixOyC2H4 + O2 => H_2O + CO2 + SiOx$$

HMDSO-monomer + oxygen => water + carbon-dioxide + silicone-oxide

In some embodiments, the surface is coated using the sputtering method. The sputtering method may also be referred to as sputter deposition. Sputter deposition is a physical vapor deposition (PVD) method of thin film deposition by sputtering. This involves ejecting material from a "target" that is a source onto a "substrate" such as a silicon wafer.

The surface may be grafted with amine groups in a PECVD process using $N_2$ and H2 or $NH_3$ gases as precursors.

In some embodiments, the surface treatment comprises plasma treatment with Ar, O2 or N2 plasma.

In some embodiments, the surface treatment comprise coating the nanotextured surface with a optically transparent layer of siliciumoxide or metal, such as tungsten (W), titanium (Ti), or chromium (Cr) and plasma treatment with Ar, O2 or N2 plasma.

In some embodiments, the nanotexture is provided by in situ block-copolymer nanolithography, electron-beam lithography, extreme UV-lithography, or x-ray lithography.

In some embodiments, the transparent element, after surface treatment, is stored in vacuum or an inert atmosphere, such as an atmosphere of N2, until use.

The first, second and other aspects and embodiments of the present invention may each be combined with any of the other aspects and embodiments. These and other aspects and embodiments of the invention will be apparent from and elucidated with reference to the embodiments described hereinafter.

## BRIEF DESCRIPTION OF THE FIGURES

The device according to the present invention will now be described in more details with regard to the accompanying figures. The figures show one way of implementing the present invention and is not to be construed as being limiting to other possible embodiments falling within the scope of the attached claim set.

Figure 1 are schematic illustrations of an embodiment of a nanotextured surface seen from above, comprising a hexagonal array of pillars.

Figure 2 are schematic illustrations of an embodiment of a transparent element with a nanotextured surface. The figure shows a side view of a cross-section of a row of pillars shown in fig. 1.

Figure 3 are schematic illustrations of two embodiments of a transparent element comprising a nanotextured structure on (3A) one surface of the transparent element and in (3B) the surface of the transparent element.

Figure 4 is a schematic illustration of two embodiments of a transparent element where the pillars protrude vertically up from a horizontal (4A) surface of a transparent element and up from a bended (4B) surface of a transparent element.

Figure 5 are schematic illustrations of an embodiment three embodiments of a coating applied on top of a nanotextured structure in a transparent element.

Figure 6 is a schematic illustration of three embodiments of a top view of pillars with different cross-section and the average equivalent diameter of each pillar.

Figure 7 is a schematic illustration of two embodiment of a view of a three-dimensional pillar with straight walls (7A) and sloped walls (7B).

Figure 8 is a schematic illustration of an embodiment of the contact angle on a flat surface and two embodiment of the contact angle on a rough surface.

DETAILED DESCRIPTION OF THE INVENTION

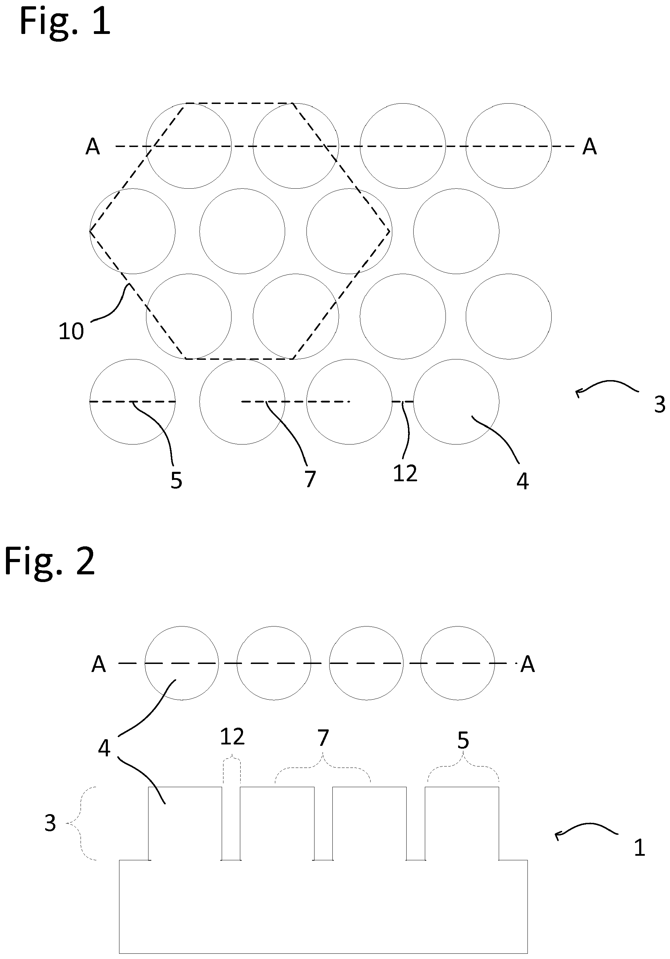

Reference is made to fig. 1 showing a top view of a nanotextured structure 3. The nanotextured structure 3 is a dense hexagonal array 10 of pillars 4 with a circular cross-section. The center-center inter-pillar pitch size 7 minus the pillar diameter 5 equals the inter-pillar space 12, which is smaller than half the pillar diameter 5.

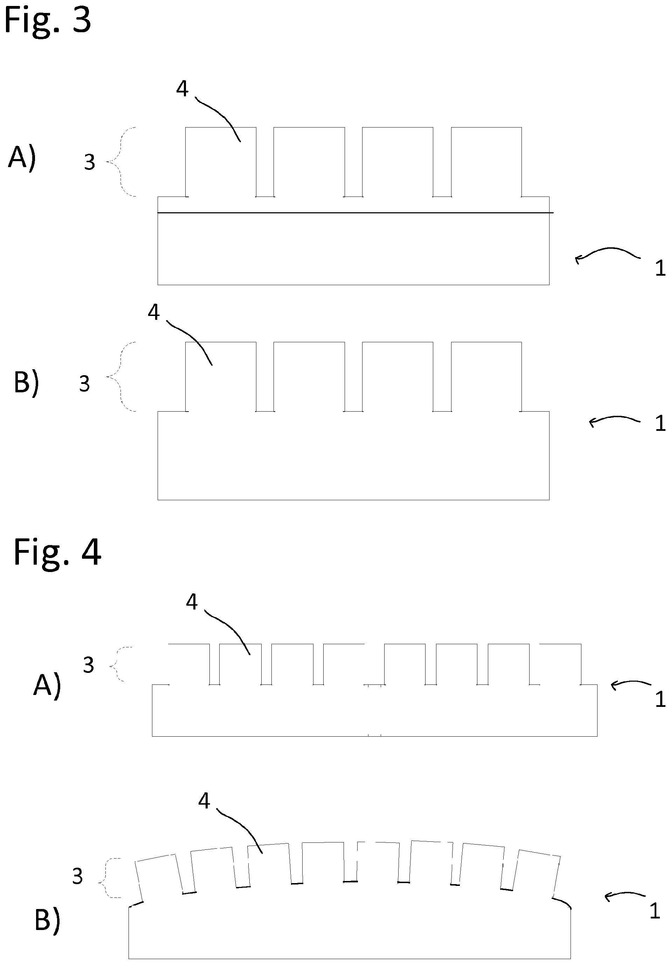

Fig. 2 illustrate a cross-sectional site view of a row of the pillars shown in fig. 1. The dotted line extending between the two A's in fig. 1, indicate the cross-sectional view illustrated in fig. 2. Fig. 2 shows the nanotextured structure 3 in a transparent element 1. The pillars 4 have a height 6 to diameter 5 aspect ratio of around 1.
Reference is made to fig. 3 illustrating a side view of two embodiments of a nanotextured structure 3 provided in or on a surface of a transparent element 1.

Fig. 3a illustrates a nanotextured structure 3 provided on a surface of a transparent element 1, whereas fig. 3b illustrates a nanotextured structure 3 provided in a surface of a transparent element 1.

Reference is made to fig. 4 illustrating a side view of a nanotextured structure 3 provided in a surface of a transparent element 1. Fig. 4a illustrates a transparent element with a linear horizontal surface, wherein the pillars 4 of the nanotextured structure 3 protrude upwardly in a direction perpendicular to the horizontal surface of the transparent element 1. Fig. 4b illustrates a transparent element 1 with a bended surface, wherein the pillars 4 of the nanotextured structure 3 protrude in a direction substantially perpendicular to surface area surrounding that pillar 4. In that way, the pillars 4 extend in different directions.

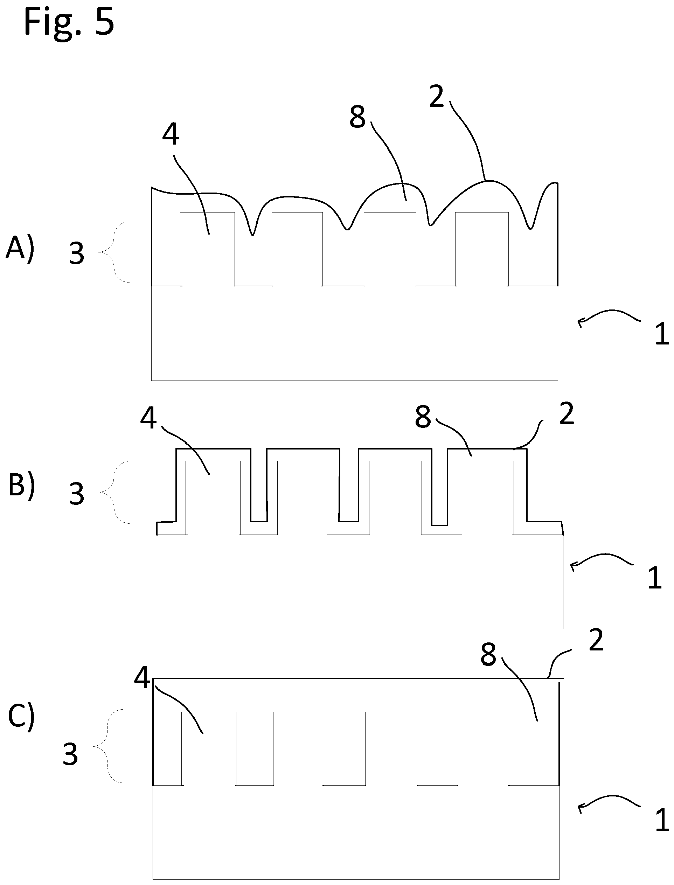

Reference is made to fig. 5, illustrate three different embodiments of aa nanotextured structure 3 in a transparent element 1, wherein the nanotextured structure 3 is covered by an optically transparent hydrophilic coating 8. In fig. 5a, the layer 8 is uneven with a varying thickness, wherein the pitches between the pillars 4 are filled with the hydrophilic coating 8. In fig. 5b, the hydrophilic layer 8 is even, with the same thickness, all over the surface of the nanotextured structure 3. In fig. 5c, the external surface is even.

In some embodiments, the optically transparent layer 8 consist of siliciumoxide or metal such as tungsten (W), titanium (Ti) or chromium (Cr). The nanotextured structure 3 together with the optically transparent hydrophilic coating 8 of siliciumoxide or metal such as tungsten (W), titanium (Ti) or chromium (Cr), render the external surface anti-fogging. The combination of a nanotextured structure and a hydrophilic layer is advantageous, as the anti-fogging effect is prolonged, compared to a transparent element with only a hydrophilic coating but no nanotextured surface beneath.

In some embodiments, the surface have further received plasma treatment before or after coating.

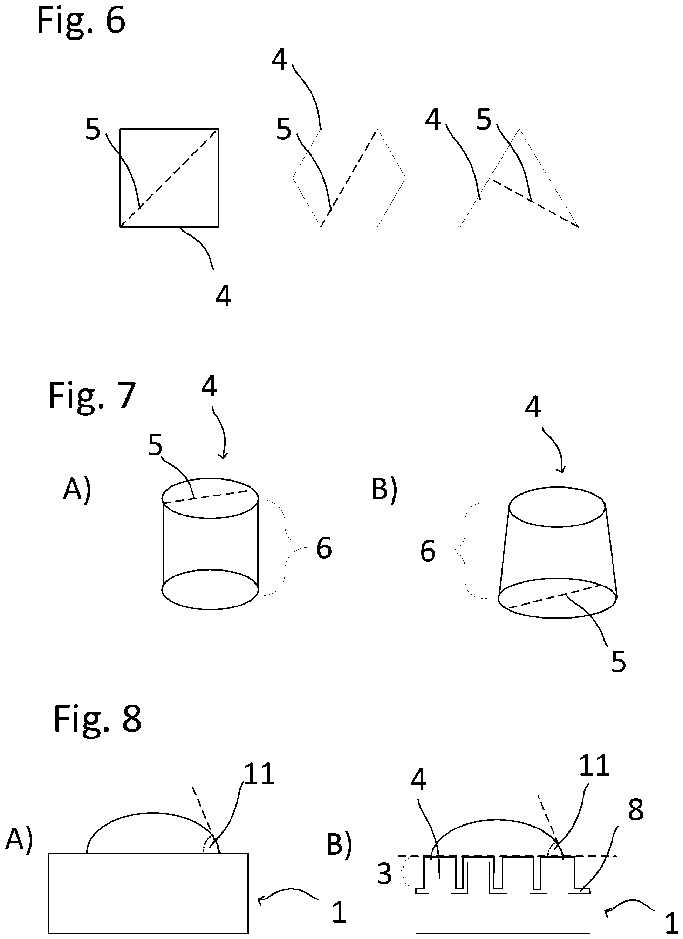

The shape and size of the pillars are primarily defined by a cross section and a height. Reference is made to fig. 6 illustrating three different embodiments of a top view of a cross-section of a pillar 4. Fig. 6a illustrates a pillar 4 with a quadratic cross section. The dotted line illustrates the length of the average equivalent diameter 5 of a pillar 4 with a square cross-section. Fig. 6b illustrates a pillar 4 with a hexagonal cross section. The dotted line illustrates the length of the average equivalent diameter 5 of a pillar 4 with a hexagonal cross-section. Fig. 6c illustrates a pillar 4 with a triangular cross section. The dotted line illustrates the length of the average equivalent diameter 5 of a pillar 4 with a triangular cross-section.

Fig. 7 illustrates a three-dimensional view of two embodiments of a pillar 4 according to the present invention. Fig. 7a illustrates a pillar 4 with a circular cross section and straight walls, e.g. a diameter that does not vary along the length of the pillar 4. The upper surface of the top of the pillar 4 is flat. Fig. 7b illustrates a pillar 4 with a circular cross-section, wherein the diameter of the cross section decreases slightly from the bottom to the top of the pillar 4, e.g. the pillar 4 have sloped walls. The average equivalent diameter 5 of a pillar with varying diameter may be defined as the diameter in the bottom of the pillar 4.

Reference is made to fig. 8a illustrating the Young's contact angle 11 on a flat surface of a transparent element 1 and fig. 8b illustrating the contact angle 11 on a nanotextured structure 3 in a transparent element 1. The Young's contact angle 11 is measured as the angle between the outer surface of the relevant liquid and a corresponding flat surface of the transparent element 1.

Although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

EXAMPLES

An object of the present invention was to provide a transparent element with anti-fogging properties stable over a long period of time.

Surprinsingly, the present inventors have found that the anti-fogging properties of a surface of a transparent element can be kept stable over a long period of time, by providing a nanotextured structure in or on a surface of a transparent element and coating the transparent element with a thin hydrophilic layer. It is well known that hydrophilic surfaces tend to lose their hydrophilic property over a short period of time due to adhesion of hydrocarbons from the ambient air. However, with the nanotextured structure of the present invention, the hydrophilic surface chemistry obtained by the hydrophilic coating is significantly prolonged.

<u>Example 1:</u>

To assess the stability of the ant-ifogging properties of surfaces of transparent elements, samples were exposed to ambient atmosphere for a period of nearly three months. A nanoptextured sample without a hydrophilic coating did not have anti-fogging properties at any time. A transparent element without a nanotextured surface, but coated with a thin hydrophilic layer, had anti-fogging properties for a short period of time, while a transparent element with a nanotextured surface and a hydrophilic coating, had significantly prolonged anti-fogging properties (See table 1). The coating considerably decreases the Young contact angle of the transparent element and increases the roughness factor for the surface by increasing the pillar diameter and thereby making the surface even denser. A hydrophilic coating deposited on a nanotextured surface, proved to have a lifetime of more than three months before losing its anti-fogging properties.

**Table 1:**

| | Transparent element with nanotextured surface and SiOx coating | Transparent element with nanotextured surface | Transparent element with SiOx coating |
|---|---|---|---|
| anti-fogging properties 0 days after coating | Yes | No | Yes |
| anti-fogging properties 84 days after coating | Yes | No | No |

The transparent element used in example 1 was PMMA. The dimensions and roughness factor of the nanotextured surface with and without SiOx coating is shown in table 3. The nanotextured surface was obtained by block copolymer (BPC) in situ nanolithography from the self-assembly of SD24, as described in the materials and methods section. The sub-diffraction limit length scale of the nanotexture rendered the surfaces perfectly transparent for visible light. The coating was a SiOx based coating deposited onto the nanotextured surface by plasma enhanced chemical vapor deposition (PECVD) as desribed in the material and methods section.

Example 2:

Furtermore, the contact angle of a transparent element with and without the SiOx coating was measured over time. It is noted that apparent contact angles of the nanotextured surface with SiOx coating remains stable for the first 14 days. After that time, a slight rise in apparent contact angle $\theta$ to 13° was observed, and a further increase to 20° was recorded after 35 days and remained stable over almost the next two months. Nevertheless, the anti-fogging behavior of the nanotextured surface did not change, as confirmed by a condensation experiment. It can be seen that despite the increase of $\theta$ to 20°, the apparent contact angle was still low enough to be anti-fogging. This observation is also supported by the evolution of the contact angle for the transparent element without a nanotextured surface coated with SiOx. Young's contact angle obtained from measurements on the transparent element without a nanotextured surface rose gradually to above 55° after almost three months of aging. However, this change turned out not to be sufficient to cause the transparent element comprising the nanotextured surface and $SiO_x$ coated sample to lose its anti-fogging property.

**Table 2:**

| | | Transparent element with nanotextured surface and $SiO_x$ coating (°) | Transparent element with SiOx coating (°) |
|---|---|---|---|
| Contact angle | 0 days | 4 | 12 |
| | 14 days | 4 | 15 |
| | 21 days | 13 | 19 |
| | 28 days | 16 | 23 |
| | 35 days | 20 | 26 |
| | 84 days | 19 | 57 |

The transparent element used in example 1 was PMMA. The dimensions and rougness factor of the nanotextured surface with and without SiOx coating is shown in table 3. The nanotextured surface was obtained by block copolymer (BPC) in situ nanolithography from the self-assembly of SD24, as described in the materials and methods section. The sub-diffraction limit length scale of the nanotexture rendered the surfaces perfectly transparent for visible light. The coating was a SiOx based coating deposited onto the nanotextured surface by plasma enhanced chemical vapor deposition (PECVD) as desribed in the material and methods section.

Example 3:

FTIR spectroscopy of freshly prepared $SiO_x$ surfaces and of aged $SiO_x$ surfaces indicated that the changes in wetting behavior over time are driven by deposition of hydro-carbon contaminations on the surface. In a practical application this hydro-carbon contamination could be avoided by proper storage in inert atmosphere.

FTIR and XPS measurements repeated on surfaces aged for two months showed slight changes in the chemical composition of the $SiO_x$ coating (See table 4). In particular, the O/Si ratio and position of Si2p remains indicative of a silica-like coating. However, in the FTIR spectrum (not shown), a noticeable additional peak at 3000 $cm^{-1}$ occurred, due to the presence of hydrocarbon CH bonds. This variation is confirmed by the increase of the carbon % detected by XPS and could be related to the well-known instability character of hydrophilic surfaces causing an increase in $\theta_Y$ of unstructured PMMA. However, when a polymer surface is made hydrophilic by a surface modification, then apart from hydrocarbon contamination, hydrophobic recovery may also result from other factors, such as polymer chain re-orientation, and out-diffusion of apolar moieties. Due to higher crosslinking and the inorganic nature of $SiO_x$ coatings, chain-reorientation, and out-diffusion effects are less likely, and hence they age predominately by contamination. The nanotexture, may further impede the aging effect of the attached CH bonds caused by environmental contamination, as it increases the surface area by the roughness factor *r*, whereby the diffusive incoming flux of hydrocarbon groups may be focused into the apexes of pillars through the so-called "diffusive flux focusing" phenomenon and thereby shielding the more critical inter-pillar area from the contamination.

**Table 4:** Atomic concentrations of $SiO_x$ coating elements.

| Aging time | C 1s | O 1s | Si 2p |
|---|---|---|---|
| t = 0 | 15.3% | 50.3% | 23.3% |
| t = 2 months | 26.4% | 57.3% | 27.4% |

The transparent element used in example 1 was PMMA. The dimensions and rougness factor of the nanotextured surface with and without SiOx coating is shown in table 3. The nanotextured surface was obtained by block copolymer (BPC) in situ nanolithography from the self-assembly of SD24, as described in the materials and methods section. The sub-diffraction limit length scale of the nanotexture rendered the surfaces perfectly transparent for visible light. The coating was a SiOx based coating deposited onto the nanotextured surface by plasma enhanced chemical vapor deposition (PECVD) as desribed in the material and methods section.

**Table 3.** Dimensions and roughness factors of nanotextured surface with and without $SiO_x$ coating and their associated uncertainties.

| | *d* [nm] | *h* [nm] | *a* [nm] | $r^a$ | *h*/*d* | *a*/*d* |
|---|---|---|---|---|---|---|
| **Nanotextured surface** | 55.1±1. 6 | 55±5 | 73.3±1.1 | 3.1±0.2 | 1.0±0.1 | 1.33±0.04 |
| **Nanotextured surface + $SiO_x$ coating** | 66.0±1. 4 | 66±5 | 74.0±2.1 | 3.9±0.3 | 1.00±0.08 | 1.12±0.04 |

Other transparent hydrophilic coatings may have the same effect as the SiOx coating. Plasma treatment is another widely applied method to achieve wetting by adding or activating surface functional groups. Plasmas of Ar, He, $O_2$, $N_2$ and air, and exposures to UV light have been tested mostly on polymeric materials and a hydrophilic behavior is achieved through this treatment.

**Materials and methods**

Nanotexturing of PMMA: Polystyrene - *b* - polydimethylsiloxane PS - PDMS block - copolymer (SD24) with a number - average molecular weight (Mn) of 172 kg / mol and a very narrow polydispersity index of PDI ≤ 1.06 (TableS1) was used for the nanolithography processing. SD24 was first dissolved in cyclohexane (0.25 wt %) and then spin - cast (LabSpin6, SUSS) on a single crystalline silicon (Si) wafer (directly from the shelf, without further cleaning) at a spinning speed of 2000 rpm, yielding a 28 nm thick film. SD24 was then subjected to the solvent annealing in methylcyclohexane at room temperature with the sample closed in a glass jar in the presence of the solvent vapor for 160 min, creating densely packed PS cylinders in a hexagonal array. Subsequent mask fabrication was conducted in an Advanced Silicon Etcher (STS MESC Multiplex ICP serial no. 30343). For pretreatment, $SF_6$ plasma was applied for 15 s (20 sccm $SF_6$, 20 mTorr, 50 W of coil power and 0 W of platen power) to remove the PDMS residual layer created on a top of the annealed surface and subsequent $O_2$ plasma etching for 11 s (10 sccm $O_2$, 5 mTorr, 200 W coil power and 20 W of platen power) to remove PS blocks and oxidize PDMS blocks simultaneously, resulting in a hard silica mask of hexagonally orientated holes with high selectivity. Pattern transfer to the silicon was performed by reactive ion etching in ICP Metal Etch (SPTS serial no. MP0637) through the first breakthrough step of the $SF_6$ plasma for 35 s (20 sccm $SF_6$, 3 mTorr, 100 W of coil power and 10 W of platen power) and following $Cl_2$ etching for 20 s (20 sccm $Cl_2$, 3 mTorr, 300 W of coil power and 40 W of coil power) creating shallow holes. Nanopillars were fabricated through initial deposition of 30 nm $Al_2O_3$ layer on a patterned substrate by ALD, working as an etching mask for a following $Cl_2$ etching. ALD deposition was performed in Picosun ALD (model R200), using alternating exposures to trimethylaluminium (97 %, Aldrich) and deionized water $H_2O$ at 200° C for 300 cycles with $N_2$ gas purge steps in between. The exposures and purge times for both precursors used in this study were 0.2 and 25 s, respectively. Adjustment of $Cl_2$ etching time to 210 s (20 sccm $Cl_2$, 3 mTorr, 300 W of coil power and 40 W of coil power) allowed for defined tuning of nanotexture aspect ratio to equal one. The nanostructured silicon master was then sputter coated with a ~ 85 nm NiV thin film (Custom System, Kurt J. Lesker) which acted as a seed layer for subsequent Ni electroplating (Microform 200, Technotrans) of an inverted relief polarity metal mold with a thickness of 300 μm. The entire Si wafer, bonded to the mold, was removed by dissolving in a 10 M KOH (Sigma - Aldrich) bath at 80°C. Before injection molding, the nickel insert was coated with a perfluorodecyltrichlorosilane (FDTS) self-assembled monolayer (MVD100E, Applied Microstructures Inc) which worked as anti-stiction layer. Polymethyl methacrylate (PMMA, IG840, LG MMA Corporation, Korea) discs (50 mm diameter, 2 mm thick) were injection molded using an industrial injection molding machine (Victory 45, Engel, Austria) facilitated with the structured nickel mold. A variothermal molding process was employed with injection pressure 1000 bar, holding pressure 1200 bar and a melt temperature 250° C. After replication, part of the flat and nanostructured PMMA surfaces were treated in a low - pressure argon plasma (Atto Plasma Cleaner, Diener Electronic) with conditions: 5 W, 60 Pa for 2 - 78 s.

Silica based ($SiO_x$) coating: of PMMA surfaces was done by plasma enhanced chemical vapor deposition (PECVD). The deposition process was carried out in a custom build RF - powered capacitive coupled plasma reactor with a stainless steel reactor chamber, and a parallel plate electrode configuration where the sample holder was the ground bottom electrode, also described by Moreno-Couranjou et al. For the $SiO_x$ coating, the plasma was fed with a hexamethyldisiloxane HDMSO/$O_2$ mixture with monomer and oxygen flow rates at 2 sccm and 150 sccm, respectively. The layer thickness was controlled by the deposition time. Hence, the process was conducted at the power of 300 W and pressure of 300 mTorr for 48 s, resulting in the ~11 nm thick coating on both flat and nanotextured PMMA.

Condensation experiment: Condensation experiments were carried out in a custom built environmental chamber of 5 x 10 x 10 $cm^3$ dimensions, equipped with a thermoelectric cooler (gSKIN, XM 27 9C, Sibalco AG, Switzerland) enabling adjustment of the substrate temperature, a copper plate working as a sample holder, and a temperature probe clamped between those two. The backside of the transparent PMMA sample was made anti-reflective using a black permanent marker. The sample was attached to the copper plate using thermal paste, and the chamber was closed. Using a LabVIEW programmed PID controller, the temperature was set to 5° C and stabilized for 75 s. Additional 8.75 min of stabilization was applied to assure the stabilization of the polymer sample. The relative humidity was continuously probed inside the chamber using a resistive hygrometer. The humidity of the vapor flow was set by choosing the mixing ratio between pure nitrogen and saturated DI water vapor prior to the chamber entrance. Diffusers were placed at both chamber inlet and outlet to remove any possible jet streams. Throughout the temperature stabilization time, 8 L/min of nitrogen was continuously run through the chamber to keep the relative humidity at 3 % and avoid any premature condensation. After temperature stabilization, 2 L/min of DI water saturated vapor was introduced into the chamber and after 5 seconds the 8 L/min of nitrogen was shut off. This caused a sudden increase in the temperature and humidity. The chamber humidity was approaching complete saturation in an exponential manner on a characteristic time scale of 36 s. Images of the condensation process were taking throughout 25 minutes of an experiment in time intervals of 3, 15 and 60 s using a Zeiss AXIO ZOOM.V16 Optical Microscope. The condensation procedure was performed one to two times on flat surfaces, and two to three times on the BCP surfaces.

Measurement of contact angles: Contact angles were measured using an optical tensiometer (Attension Theta optical tensiometer, Biolin Scientific Holding AB, Sweden) with a high - speed camera (3000 fps, MotionXtra N3, IDT, USA) by the sessile drop method in a static mode. Shapes of droplets were fitted by the Young - Laplace fitting method (Attention Theta software, version 4.2). For all contact angle measurements, droplets of 6.5 μl volume were used. The baseline was determined using an auto baseline function in the Attention Theta software. For each sample, three measurements were made at different spots of the sample and mean values with standard deviations were calculated. Contact angles of the wetting samples were made on timescales much shorter than those associated with the hemiwicking flow.

LIST OF REFERENCE SYMBOLS USED

1 transparent element
2 anti-fogging surface
3 nanotextured structure in or on surface of transparent element
4 pillar
5 average pillar equivalent diameter
6 average pillar height
7 average center-center inter-pillar pitch size
8 optically transparent hydrophilic coating or layer
9 plasma treatment
10 hexagonal array
11 Young's contact angle
12 inter-pillar space

## Claims

**1.** A transparent element (1) comprising at least one anti-fogging surface (2) with a hydrophilic surface chemistry and a Young's contact angle (11) of less than 55 degrees, wherein the anti-fogging surface (2) comprise a nanotextured structure (3) on and/or in the transparent element (1), the nanotextured structure (3) comprising a dense hexagonal array (10) of pillars (4), wherein

- ◦ the average pillar equivalent diameter (5) is in the range of 25-175 nm;
- ◦ the average pillar height (6) to average pillar equivalent diameter (5) ratio is in the range of 2:1 and 1:2, preferably in the range of 1:0.9 and 1:1.1;
- ◦ the average center-center inter-pillar pitch size (7) is in the range of 30-180 nm;
- ◦ the inter-pillar space (12), defined as the average center-center inter-pillar pitch size (7) minus the average pillar equivalent diameter (5), is in the range of 5-20 nm and less than half of the average pillar equivalent diameter (5); and
- ◦ the surface fraction is between 40-85%

**2.** A transparent element (1) according to claim 1, wherein the nanotextured surface is coated by an optically transparent layer (8) of siliciumoxide or metal such as tungsten (W), titanium (Ti) or chromium (Cr).

**3.** A transparent element (1) according to claim 1 or 2, wherein the nanotextured surface have received plasma treatment (9) with Ar, O2 or N2 plasma.

**4.** A transparent element (1) according to any of the preceding claims, wherein the thickness of the transparent siliciumoxide or metal layer (8) is between 5-20 nm, such as between 10-20 nm, such as between 10-15 nm.

**5.** A transparent element (1) according to any of the preceding claims, wherein the anti-fogging surface have a ratio of the actual surface area to the projected surface area between 2.5-5.5.

**6.** A transparent element (1) according to any of the preceding claims, wherein the transparent element essentially consist of glass or plastic, such as thermoplastic.

**7.** A transparent element (1) according to any of the preceding claims, wherein the transparent element essentially consist of poly(methylmethacrylate).

**8.** A transparent element (1) according to any of the preceding claims, wherein the transparent element is used in or as windows, lenses, glasses, mirrors, goggles, wind shields, endoscopy devices, photovoltaic devices, fresnel optical elements, instrument panels or screens, optical user-interfaces or lighting devices.

**9.** A method for providing a transparent element (1) comprising at least one anti-fogging surface (2), the method comprising

- providing a transparent element (1);
- providing a nanotextured surface (3) comprising a dense hexagonal array of pillars (4), wherein
  - ◦ the average pillar equivalent diameter (5) is in the range of 25-175 nm;
  - ◦ the average pillar height (6) to average pillar equivalent diameter (5) ratio is in the range of 2:1 and 1:2, preferably in the range of 1:0.9 and 1:1.1;
  - ◦ the average center-center inter-pillar pitch size (7) is in the range of 30-180 nm;
  - ◦ the interpillar space (12), defined as the average center-center inter-pillar pitch size (7) minus the average pillar equivalent diameter (5) is in the range of 5-20 nm and less than half of the average pillar equivalent diameter (d); and
  - ◦ the surface fraction is between 40-85%
- surface treating the nanotextured surface

**10.** A method for providing a transparent element (1) according to claim 9, wherein the surface treatment comprise coating the nanotextured surface with a optically transparent layer (8) of siliciumoxide or metal, such as tungsten (W), titanium (Ti), or chromium (Cr).

**11.** A method for providing a transparent element (1) according to claims 9 or 10, wherein the surface treatment comprise plasma treatment (9) with Ar, O2 or N2 plasma.

**12.** A method for providing a transparent element (1) according to any of claims 9-11, wherein the nanotextured structure (3) is provided by in situ block-copolymer nanolithography, electron-beam lithography, extreme UV-lithography, or x-ray lithography.

**13.** A method for providing a transparent element (1) according to any of claims 9-12, wherein the nanotextured structure (3) is coated by the plasma enhanced chemical vapor deposition (PECVD) method or the sputtering method.

**14.** A method of providing a transparent element (1) according to any of claims 9-13, wherein the transparent element (1), after surface treatment, is stored in vacuum or an inert atmosphere, such as an atmosphere of N2, until use.

Fig. 1

A
A
10
3
5
7
12
4

Fig. 2

A
A
12
7
5
4
3
1

# Fig. 3

4
A)
3
1
4
B)
3
1

# Fig. 4

4
3
A)
1
4
3
B)
1

Fig. 5
A)
B)
C)
1
2
3
4
8

Fig. 6

4
5
5
4
5
4

Fig. 7

A)

4

5

6

B)

4

6

5

Fig. 8

11
A)
1
11
4
8
B)
3
1

Europäisches Patentamt
European Patent Office
Office européen des brevets

# EUROPEAN SEARCH REPORT

Application Number
EP 18 15 0811

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 693 238 A1 (DEXERIALS CORP [JP]) 5 February 2014 (2014-02-05) * paragraphs [0042] - [0114], [0149] - [0155]; figures 1, 2 * | 1-14 | INV. G02B1/18 |
| X | EP 3 165 358 A1 (DEXERIALS CORP [JP]) 10 May 2017 (2017-05-10) * paragraphs [0020] - [0041], [0085] - [0092]; figures 1, 2 * | 1-14 | |
| A | EP 3 176 613 A1 (DEXERIALS CORP [JP]) 7 June 2017 (2017-06-07) * paragraphs [0014], [0032] - [0081], [0109]; figures 1A-2B; example 1 * | 1-14 | |
| A | DESROUSSEAUX C ET AL: "Fabrication of acrylonitrile-butadiene-styrene nanostructures with anodic alumina oxide templates, characterization and biofilm development test for staphylococcus epidermidis", 20150818, 18 August 2015 (2015-08-18), pages 1-21, XP002763994, DOI: 10.1371/JOURNAL.PONE.0135632 * Polymer nanostructuration; c. Surface roughness and topographical characterization; tables 1, 5 * | 1-14 | TECHNICAL FIELDS SEARCHED (IPC): G02B |

-/--

The present search report has been drawn up for all claims

| Place of search | Date of completion of the search | Examiner |
|---|---|---|
| Munich | 15 June 2018 | Zwerger, Markus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

2
EPO FORM 1503 03.82 (P04C01)

Europäisches Patentamt
European Patent Office
Office européen des brevets

# EUROPEAN SEARCH REPORT

Application Number
EP 18 15 0811

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | FIEDLER JÖRG ET AL: "The effect of substrate surface nanotopography on the behavior of multipotnent mesenchymal stromal cells and osteoblasts", BIOMATERIALS, vol. 34, no. 35, 19 August 2013 (2013-08-19), pages 8851-8859, XP028699881, ISSN: 0142-9612, DOI: 10.1016/J.BIOMATERIALS.2013.08.010 * 3.2. Wetting behaviour of SiO2 nanopillars; table 1 * ----- | 1-14 | |
| A | WO 2012/020295 A1 (6UNIVERSITA DEGLI STUDI DI BARI [IT]; PLASMA SOLUTION S R L [IT]; CONS) 16 February 2012 (2012-02-16) * page 1, lines 19-21 * * page 8, line 25 - page 11, line 29 * * figure 5 * ----- | 2-4,10, 11 | TECHNICAL FIELDS SEARCHED (IPC) |

The present search report has been drawn up for all claims

2

| Place of search | Date of completion of the search | Examiner |
|---|---|---|
| Munich | 15 June 2018 | Zwerger, Markus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO. EP 18 15 0811

This annex lists the patent family members relating to the patent documents cited in the above-mentioned European search report. The members are as contained in the European Patent Office EDP file on
The European Patent Office is in no way liable for these particulars which are merely given for the purpose of information.

15-06-2018

| Patent document cited in search report | Publication date | Patent family member(s) | Publication date |
|---|---|---|---|
| EP 2693238 A1 | 05-02-2014 | CN 103518149 A | 15-01-2014 |
| | | EP 2693238 A1 | 05-02-2014 |
| | | JP 6164085 B2 | 19-07-2017 |
| | | JP WO2012133946 A1 | 28-07-2014 |
| | | KR 20140036159 A | 25-03-2014 |
| | | RU 2013143556 A | 20-05-2015 |
| | | US 2014098422 A1 | 10-04-2014 |
| | | WO 2012133946 A1 | 04-10-2012 |
| EP 3165358 A1 | 10-05-2017 | EP 3165358 A1 | 10-05-2017 |
| | | JP 2016029446 A | 03-03-2016 |
| | | KR 20170039085 A | 10-04-2017 |
| | | TW 201604008 A | 01-02-2016 |
| | | US 2017208878 A1 | 27-07-2017 |
| | | WO 2016013290 A1 | 28-01-2016 |
| EP 3176613 A1 | 07-06-2017 | EP 3176613 A1 | 07-06-2017 |
| | | JP 2016033647 A | 10-03-2016 |
| | | KR 20170021790 A | 28-02-2017 |
| | | TW 201607753 A | 01-03-2016 |
| | | US 2017209308 A1 | 27-07-2017 |
| | | WO 2016017391 A1 | 04-02-2016 |
| WO 2012020295 A1 | 16-02-2012 | NONE | |

EPO FORM P0459

For more details about this annex : see Official Journal of the European Patent Office, No. 12/82